# EUROPÄISCHE PATENTSCHRIFT

(11) **EP 0 332 568 B1**
(45) Veröffentlichungstag und Bekanntmachung des Hinweises auf die Patenterteilung: **07.01.1993**
(21) Anmeldenummer: 89730053.9
(22) Anmeldetag: 01.03.1989
(51) Int. Cl.: H02P 1/50, H02H 7/08

(54) **Betriebsverfahren und Steuerschaltung zur Anlaufüberwachung für elektrische Hochspannungsmotoren mit asynchronem Anlauf**
Operating method and control circuit to monitor the start of electric high-voltage motors using asynchronous starting
Procédé de travail et circuit de commande pour surveiller le démarrage de moteurs électriques à haute tension avec démarrage asynchrone

(30) Priorität: 08.03.1988 DE 3808028
(43) Veröffentlichungstag der Anmeldung: 13.09.1989
(73) Patentinhaber: SIEMENS AKTIENGESELLSCHAFT, 80333 München (DE)
(72) Erfinder: Bredhauer, Jürgen, Dipl.-Ing., D-1000 Berlin 28 (DE); Hirmke, Werner, D-8501 Kalchreuth (DE)

(56) Entgegenhaltungen:
- EP-A- 0 033 161
- EP-A- 0 106 255
- DE-A- 2 549 850
- US-A- 4 550 277
- BROWN BOVERI MITTEILUNGEN, Band 61, Nr. 7, 1974, Seiten 313-318; M. CANAY: "Asynchronanlauf einer grossen 230-mva-Synchronmaschine im Pumpspeicherwerk "Vianden 10""

## Beschreibung

Die Erfindung betrifft ein Betriebsverfahren für elektrische Motoren, bei dem Läuferdrehzahl und zugeführte Leistung erfaßt werden und bei dem Erwärmungswerte, die den relativen Erwärmungszustand des Motors darstellen, wenn dieser bei unterschiedlichen Drehzahlen und Belastungszuständen betrieben wird, gespeichert sind, wobei ein Erwärmungswert jedem bezeichneten Betriebsbereich zugeordnet ist, und bei dem periodisch aufgrund der Läuferdrehzahl und der zugeführten Leistung ermittelt wird, in welchem der bezeichneten Betriebsbereiche der Motor augenblicklich arbeitet.

Ein derartiges Betriebsverfahren ist aus der EP-B1 00 33 161 bekannt. Bei diesem bekannten Verfahren sind für jeden stationären Betriebszustand des Motors Betriebsbereiche gebildet, die durch die Drehzahl und die Leistungsaufnahme des Motors definiert sind. Diesen Betriebsbereichen sind Erwärmungswerte zugeordnet, die zusammen mit den Betriebsbereichen in Form einer Erwärmungszustandsmatrix zusammengestellt sind. Der jeweilige Betriebsbereich des Motors und damit die Elemente der Erwärmungszustandsmatrix sind z. B. aus den Wertepaaren Drehzahl und Drehmoment bestimmt. Zur Erfassung von Drehzahl und Leistungsaufnahme bzw. Drehmoment dienen die Auswertung der Signale eines Drehzahlsensors und die Auswertung des Phasenanschnittwinkels, der zur einstellbaren Leistungszuführung des Motors vorgesehenen leistungselektronischen Regeleinrichtung.

Jedem durch die Drehzahl und den Phasenanschnittwinkel definierten Betriebsbereich ist ein empirisch ermittelter Erwärmungswert zugeordnet und in einer ersten Speichereinrichtung gespeichert. Dabei reichen die gespeicherten Erwärmungswerte von positiven bis zu negativen Werten. Positive Erwärmungswerte sind vorgegeben, wenn die Motortemperatur in einem Betriebsbereich steigt, während negative Erwärmungswerte Betriebsbereichen mit fallender Temperatur zugeordnet sind. Für gleichbleibende Motortemperatur ist der Wert Null vorgesehen (siehe EP-B1-00 33 161, Seite 5, Figur 6). Die in der ersten Speichereinrichtung gespeicherte Erwärmungszustandsmatrix wird bei dem aus der EP-B1-00 33 161 bekannten Verfahren periodisch von einer Überwachungseinrichtung auf der Basis einer Prozessoreinheit mit dem aktuellen Betriebsbereich verglichen und die zugehörigen Erwärmungswerte in eine zweite Speichereinrichtung eingelesen und zu einem akkumulierten Gesamtwert addiert. Beim Überschreiten eines vorbestimmten oberen Grenzwertes für den Speicherinhalt wird eine Überlastung des Motors aufgrund des aktuellen Betriebszustandes angenommen. Normale Betriebsbedingungen werden dagegen vorausgesetzt, wenn der Speicherinhalt sich unterhalb einer vorbestimmten Untergrenze befindet.

Das bekannte Betriebsverfahren ist insbesondere für Motoren von Werkzeugmaschinen und deren Überlastungsschutz vorgesehen, bei denen sehr kleine Motoren, vornehmlich Universalmotoren, eingesetzt sind. Diese Motoren besitzen in der Regel eine ebenfalls aus der EP-B1-00 33 161 bekannte, mit leistungselektronischen Bauelementen geregelte Leistungseinspeisung, in deren regelungstechnisches Konzept das bekannte Betriebsverfahren ohne zusätzlichen Aufwand integriert werden kann, da eine elektronische Leistungsregelung vorgesehen ist. Außerdem ist der Betrieb von Werkzeugmaschinen, z. B. Handbohrmaschinen und dergleichen, von ständig wechselnder Beanspruchung mit variablen Antriebsmomenten, die aber nur einen geringen Leistungsbedarf haben, begleitet, so daß zwar eine aufwendige Regelung notwendig, diese aber mit relativ leistungsschwachen Bauelementen realisierbar ist.

Bei derartigen Werkzeugmaschinen kleiner Leistung kommen in der Regel kleine Universalmotoren zum Einsatz, bei denen der eingespeiste Strom sowohl über den Ständer als auch über den Läufer geführt ist, so daß der im Läufer fließende Strom gleich dem eingespeisten Strom ist und deshalb der Läuferstrom unmittelbar durch Messung des Ständerstromes bestimmbar ist. Das Spektrum der Betriebsbereiche eines derartigen Universalmotors reicht bei kleinen Handwerkzeugmaschinen fließend vom Stillstand über Anlauf, Vollast, Leerlauf, Auslauf, usw., wobei auch äußerst unterschiedliche Kombinationen von Drehzahl und Läuferstrom auftreten können. Die Erwärmung eines solchen Motors ist während des Anlaufes kaum verschieden von einem Betrieb in festgebremsten Zustand. Außerdem sind keine besonderen Läuferteile gegeben, die allein durch Anlaufvorgänge belastet oder gefährdet sind.

Für große elektrische Hochspannungsmotoren hoher Leistung, die z. B. zum Antrieb von Holzverarbeitungsmaschinen (Refiner), Verdichter, Lüftern, Pumpen oder Mühlen eingesetzt werden, ist dagegen wegen des hohen Leistungsbedarfs im Betrieb eine Regelung der Einspeisungsleistung mit leistungselektronischen Mitteln für die meisten Anwendungsfälle ungeeignet, weil der Aufwand zu hoch wäre. Solche große Motoren sind deshalb meist als Hochspannungs-Asynchronmotoren oder -Synchronmotoren ausgeführt.

Derartige große elektrische Hochspannungsmotoren werden im allgemeinen asynchron vom Netz aus angefahren. Dazu dienen entweder eine besondere Anlaufwicklung, wie z. B. eine Käfigwicklung oder es können bestimmte Teile der vorhandenen Läuferwicklung, z. B. der obere Teil der Keilstäbe bei einer Keilstabläuferwicklung oder der Oberstab einer Doppelkäfigläuferwicklung, beim Anlauf belastet werden. Ferner können aber auch der Läuferkörper selbst oder Teile davon für die Führung der beim asynchronen Anlauf auftretenden, induzierten Ströme verwendet werden, ohne daß eine ausgeprägte Läuferwicklung oder bestimmte Läuferwicklungsteile vorhanden sind. Hierfür können z. B. nicht geblechte Teilbereiche des Läuferkörpers, welche die Ausbildung von Wirbelströmen beim asynchronen Anlauf innerhalb des Läufers erlauben, Verwendung finden. Bei derartigen schleifringlosen Hochspannungsmotoren werden die dem Anlaufdrehmoment proportionalen Läuferanlaufverluste praktisch vollständig innerhalb der Läuferanlaufwicklungen oder -wicklungsteile bzw. im Läuferkörper oder in Läuferkörperteilen umgesetzt. Im Gegensatz zu Schleifringläufer-Motoren erfolgt die Umsetzung der Anlaufverluste nicht in externen Anlaßwiderständen, sondern hauptsächlich innerhalb des Läufers selbst, weshalb sich die zuvor genannten betroffenen Teile beim Anlauf sehr stark erwärmen.

Bei einem großen Hochspannungsmotor ist gegenüber einem kleinen Werkzeugmaschinenmotor der Anlauf kein normaler Betriebszustand sondern, wie auch in den Britschen Normen für elektrische Maschinen British Standard 5000, Part 16, 1981, Art. 10, Absatz 1 ausgeführt, ein transienter Vorgang. Dieser transiente Vorgang beansprucht im wesentlichen nur die beim asynchronen Anlauf betroffenen Teile im Läufer des Hochspannungsmotors, so daß dessen gesamte thermische Belastbarkeit für Anlaufvorgänge durch die Belastbarkeit dieser Teile bestimmt ist.

Aus der EP-B1 00 33 161 ist ferner eine Steuerschaltung zur Überwachung der Betriebstemperatur eines Elektromotors, insbesondere Werkzeugmaschinen-Universalmotors bekannt. Diese Steuerschaltung berücksichtigt jedoch nur tatsächlich auftretende Betriebszustände, denen empirisch ermittelte Erwärmungswerte zugeordet sind. Weder für die besonderen Beanspruchungen eines großen Hochspannungsmotors beim transienten Vorgang des asynchronen Anlaufes und der dabei auftretenden, zeitlich abhängigen Erwärmung bzw. Abkühlung seiner beim Anlauf betroffenen Teile des Läufers sind spezifische schaltungstechnische Hinweise gegeben, noch geht die bekannte Steuerschaltung auf die Bedingungen ein, unter denen ein derartiger großer Hochspannungsmotor betrieben wird. Außerdem kann die bekannte Steuerschaltung die Belange der Betriebsführung, insbesondere bezogen auf die Häufigkeit und Randbedingungen von Anlaufvorgängen, nicht berücksichtigen, da sie auf der Grundlage einer elektronisch geregelten Leistungszuführung für einen kleinen Werkzeugmaschinen-Universalmotor konzipiert ist.

Gegenüber einem kleinen Werkzeugmaschinen-Universalmotor ist bei asynchronen Anlaufvorgängen eines großen Hochspannungsmotors zusätzlich auf die Bedingungen detalliert Rücksicht zu nehmen, unter denen der Anlauf selbst stattfindet, weil dabei der Drehzahl- und Stromverlauf für die Belastung der beim Anlauf betroffenen Teile den wichtigsten Einfluß haben und deren thermische Belastung bestimmen.

Das Verfahren zum Betrieb von derartigen elektrischen Hochspannungsmotoren muß deshalb berücksichtigen, daß die Leistungseinspeisung nur ein- oder ausgeschaltet werden kann, also keine fremd geführte Regelung der Motorleistung vorliegt. Aus physikalischen Gründen ist die thermische Belastbarkeit der Anlaufwicklung eines solchen Hochspannungsmotors zeitlich begrenzt. Insbesondere für die Bedingungen des asynchronen Anlaufs besteht bei großen Hochspannungsmotoren die Gefahr der thermischen Überlastung der beim Anlauf betroffenen Teile, da diese nicht für dauernde Anlaufbelastungen ausgeführt werden können und die anzutreibenden Maschinen häufig ein sehr hohes Gegenmoment aufweisen oder gar durch Blockieren den Motor festbremsen können, so daß der Stromfluß in den Anlaufwicklungen auf unterschiedlichem Niveau lange andauern kann.

Die Aufgabe der vorliegenden Erfindung besteht darin, ein Betriebsverfahren für große elektrische Hochspannungsmotoren, insbesondere für solche mit asynchronem Selbstanlauf anzugeben, das die Anlaufbedingungen auch bei erschwertem Anlauf oder festgebremsten Motor mit einfachen Mitteln erfaßt und einen Überlastungsschutz der beim asynchronen Anlauf betroffenen Teile des Läufers dadurch gewährleistet, daß die Häufigkeit des Anlaufs an der individuellen thermischen Belastbarkeit dieser Teile orientiert und dadurch begrenzt ist. Zusätzlich soll der Betriebszustand des Hochspannungsmotors durch die Erfassung möglichst weniger, leicht zugänglicher Größen bestimmbar sein und die Verfügbarkeit dieses wesentlichen Investitionsgutes durch den Einbau dieses Schutzes nicht eingeschränkt werden.

Bei einem Betriebsverfahren der eingangs beschriebenen Art wird diese Aufgabe dadurch gelöst, daß gemäß der Erfindung zum Schutz von asynchron anlaufenden Hochspannungsmotoren mit einer Umsetzung der Anlaufverluste hauptsächlich innerhalb des Läufers gegen Überlastung während des Anlaufes oder in festgebremsten Zustand zur Bestimmung der im Läufer umgesetzten Leistung lediglich der Ständerwicklungsstrom erfaßt wird, daß die Zahl und die Dauer der Anlaufvorgänge des Hochspannungsmotors überwacht werden und die dynamische Erwärmung und Abkühlung der beim Anlauf betroffenen Läuferteile während der Anlaufvorgänge, der unterschiedlichen Betriebszustände, Auslaufvorgänge und Betriebspausen jeweils durch spezifische, den zeitlichen Verlauf aller transienten und stationären Betriebszustände und Betriebspausen sowie den dabei auftretenden Ständerstrom und die Läuferdrehzahl berücksichtigende, diskrete Wertekombinationen in Form von Erwärmungszustandsmatrizen der betroffenen Läuferteile und Betriebszustandsmatrizen des Hochspannungsmotors repräsentiert sind, aus denen Erwärmungs- und Abkühlwerte der betroffenen Läuferteile abgeleitet sind, die mit entgegengesetztem Vorzeichen zu einem akkumulierten Gesamtwert addiert, gespeichert und angezeigt werden, durch den bestimmt ist, wieviel Anlaufvorgänge noch möglich sind, und daß bei einem bestimmten ersten Wert des akkumulierten Gesamtwertes eine Ausschaltung des Motors erfolgt, und daß eine Einschaltung durch Verriegelung verhindert ist, solange der akkumulierte Gesamtwert einen bestimmten zweiten Wert nicht erreicht hat.

Durch dieses Verfahren ist es ermöglicht, ein theoretisches Erwärmungsmodell für die zeitabhängige, dynamische Erwärmung und Abkühlung der beim Anlauf betroffenen Teile im Läufer eines großen Hochspannungsmotors für alle stationären und transienten Betriebszustände und vor allem für den transienten Vorgang des asynchronen Anlaufes zu berücksichtigen. Dazu werden die Zahl und die Dauer der Anlaufvorgänge, die dabei auftretenden Ströme im Ständer sowie die Läuferdrehzahl registriert und aufgrund dieser transienten Vorgänge sowie der auftretenden Betriebszustände wie Leerlauf, Nennbetrieb, Auslauf, Festbremsung, Stillstand oder auch bekannte Betriebszustandsdaten in das theoretische Erwärmungsmodell eingesetzt und Kriterien für die Bildung von diskreten Erwärmungs- und Abkühlwerten der beim Anlauf betroffenen Läuferteile abgeleitet. Dabei ist außerdem berücksichtigt, daß die Erwärmungs- und Abkühlwerte zeitabhängigen Erwärmungs- und Abkühlfunktionen entsprechen, die durch das theoretische Erwärmungsmodell bestimmt sind, d. h. daß die Tatsache, ob der Hochspannungsmotor beim Entwärmen läuft oder stillsteht, voll mit in das Betriebsverfahren eingeht.

Insgesamt benötigt das Betriebsverfahren als Eingangsdaten lediglich die Drehzahl, den Ständerstrom und die zeitliche Dauer (der Anlaufvorgänge bzw. der stationären Betriebszustände, der Auslaufvorgänge und der Betriebspausen), um daraus mit Hilfe des theoretischen Erwärmungsmodells den Erwärmungszustand der beim Anlauf betroffenen Teile des Läufers fortlaufend zu bestimmen. Es ist nicht erforderlich, die in diesen Teilen umgesetzte Energie zu messen. Dazu wären bei großen Hochspannungsmotoren in den üblicherweise nicht zugänglichen, beim Anlauf betroffenen Teilen des Läufers Temperatursensoren oder Strommeßeinrichtungen nötig, deren Meßwerte vom rotierenden Läufer über Schleifringe oder andere Übertragungsmittel auf stehende Teile übergeleitet werden müßten, um z. B den in ihnen fließenden Strom messen zu können und dadurch auf die in ihren umgesetzte Verlustleistung schließen zu können. Somit ist ein zusätzlicher, konstruktiver Aufwand für die Überwachung des Erwärmungszustandes der beim Anlauf betroffenen Läuferteile des Hochspannungsmotors vermieden.

Die auftretenden stationären und transienten Betriebszustände sind in Form von Betriebszustandsmatrizen, welche aus den Elementen Ständerstrom und Läuferdrehzahl bzw. Ständerstrom und Stromflußdauer bestehen, katalogisiert und enthalten auch die transienten Vorgänge, insbesondere die Anlaufvorgänge. Mit Hilfe des theoretischen Erwärmungsmodells sind für die beim Anlauf betroffenen Läuferteile Erwärmungszustandsmatrizen gebildet, die ebenfalls die Elemente Ständerstrom, Läuferdrehzahl und Stromflußdauer sowie darüber hinaus die sich durch das theoretische Erwärmungsmodell ergebenden Erwärmungs- und Abkühlwerte entsprechend der zeitabhängigen Erwärmungs- und Abkühlfunktionen enthalten. Beim Anlauf, Betrieb und Stillstand und auch bei festgebremsten Hochspannungsmotor werden aufgrund der aktuellen Betriebszustandsdaten aus den Betriebszustandsmatrizen Werte ausgewählt, die jeweils den Elementen der Erwärmungszustandsmatrix zugeordnet sind. Somit werden bestimmte Erwärmungs- bzw. Abkühlwerte ausgewählt. Diese Auswahl der Erwärmungs- und Abkühlwerte erfolgt periodisch.

Die periodisch abgeleiteten Erwärmungswerte werden mit negativem, die Abkühlwerte mit jeweils positiven Vorzeichen zu einem akkumulierten Gesamtwert fortlaufend addiert, so daß ein dem Erwärmungszustand der beim Anlauf betroffenen Läuferteile umgekehrt proportionaler, aktueller, diskreter Wert ständig vorliegt.

Aufgrund der Bilanz dieses akkumulierten Gesamtwertes kann eine Abschätzung über die insgesamt noch ohne Überlastung zur Verfügung stehenden möglichen Anlaufvorgänge getroffen werden: Für einen Anlauf ist z. B. ein bestimmtes Maß diskreter Werte vorgesehen, das den Stand des akkumulierten Gesamtwertes sprunghaft senkt. Für diejenigen Betriebszustände oder -pausen, bei denen die Anlaufwicklungen abkühlen, sind die der Abkühlung umgekehrt proportionalen, diskreten Werte feiner gestuft, so daß der Stand des akkumulierten Gesamtwertes langsam bis auf einen vorher festgelegten Höchstwert erhöht ist, durch den zugleich die maximale Anzahl von Anlaufvorgängen indirekt festgelegt ist. Weist der akkumulierte Gesamtwert einen Stand auf, der kleiner als das für einen Anlauf notwendige Maß ist, so ist erkennbar, daß kein weiterer Anlauf mehr durchgeführt werden kann. Ein Anlauf ist erst dann sinnvoll, wenn nach erfolgter Abkühlung der beim Anlauf betroffenen Läuferteile ein ausreichender Stand des akkumulierten Gesamtwertes vorhanden ist.

Das Verfahren berücksichtigt u. a. auch, daß bei Betrieb des Hochspannungsmotors im Leerlauf eine sehr wirksame Kühlung gegeben ist, so daß der akkumulierte Gesamtwert sehr schnell wieder ansteigt und dadurch aus dem angezeigten Stand des akkumulierten Gesamtwertes die Möglichkeit ablesbar ist, einen neuen Anlauf unter Lastbedingungen durchzuführen.

Zusätzlich ist ein Kleinstwert für den akkumulierten Gesamtwert definiert, bei dem eine Unterbrechung des Ständerstromes ausgelöst ist. Eine Verriegelungseinrichtung sorgt dafür, daß ein erneuter Anlauf erst dann erfolgen kann, wenn der akkumulierte Gesamtwert einen ausreichend hohen Stand aufweist. Es kann vorteilhaft sein, daß aus dem letzten Auslaufvorgang Elemente der Betriebszustandsmatrizen ausgewählt und daraus Erwärmungswerte für den nächsten Anlauf vorbestimmt werden und zusätzlich angezeigt sind. Dadurch ist eine flexible Betriebsführung erzielt, die insbesondere bei Antrieben von großen Holzbearbeitungsmaschinen (Refiner) von Vorteil ist. Das Betriebspersonal kann nämlich aufgrund des angezeigten Standes des akkumulierten Gesamtwertes und der zusätzlichen Anzeige der beim nächsten Anlauf zu erwartenden Veränderung dieses Standes entscheiden, welche Art des weiteren Betriebes noch möglich ist und welcher die größte Effizienz bietet, ohne jedoch den Hochspannungsmotor zu gefährden. So kann z. B. durch schnelles Entladen des Refiners nach einem mißglückten Schweranlauf ein Anlauf ohne Last mit anschließendem stark kühlendem Leerlauf durchgeführt werden, so daß der Hochspannungsmotor sehr schnell abkühlt und für einen neuen Anlauf unter Last bereit ist. Dadurch können Betriebsstillstände, die durch lange Abkühlphasen des Hochspannungsmotors entstehen können und besonders bei Holzverarbeitungsprozessen in Papierfabriken zu hohen Ausfallzeiten führen können, vermieden werden.

Es kann ferner vorteilhaft sein, daß die Anzeige des akkumulierten Gesamtwertes in natürlichen, ganzen Zahlen erfolgt. Durch eine derartige Darstellung des akkumulierten Gesamtwertes ist es dem Betriebspersonal leicht möglich, den aktuellen Erwärmungszustand der beim Anlauf betroffenen Läuferteile und damit die Betriebsbereitschaft des Hochspannungsmotors zu verfolgen und die Führung des Betriebes entsprechend einzurichten.

Es kann darüber hinaus von Vorteil sein, daß zusätzliche Schwellenwerte von Ständerstrom und Läuferdrehzahl definiert sind, die als Auslösekriterium für Unterfunktionen dienen und dem akkumulierten Gesamtwert überlagert sind. Dadurch sind unter Berücksichtigung des Erwärmungszustandes des Hochspannungsmotors aufgrund bestimmter Werte des Ständerstromes und der Läuferdrehzahl zusätzliche Kriterien gebildet, die für die Betriebsführung zusätzliche Informationen geben. Beispielsweise kann so erkannt werden, daß bei Stillstand des Motors (Läuferdrehzahl = 0) aber gleichzeitig gegebenen vollem Ständerstrom der Motor offensichtlich festgebremst ist, so daß ein Abbruch des Anlaufes notwendig ist, obwohl die Erwärmung der beim Anlauf betroffenen Läuferteile dies noch nicht erforderlich machen würde. Die Notwendigkeit zum Abbruch des Anlaufes wäre durch Auswertung des Standes des akkumulierten Gesamtwertes allein nicht erkennbar.

Eine besonders vorteilhafte Weiterbildung der Erfindung betrifft eine Steuerschaltung zur Durchführung des vorgenannten Betriebsverfahrens für einen asynchron anlaufenden elektrischen Hochspannungsmotor mit einer Umsetzung der Anlaufverluste hauptsächlich innerhalb des Läufers zu dessen Schutz gegen Überlastung während des asynchronen Anlaufes oder im festgebremsten Zustand, die einen Drehzahlsensor zur Feststellung der Drehzahl des Hochspannungsmotors und zur Erzeugung eines drehzahlproportionalen, ersten Eingangssignals sowie erste digitale Speichermittel zur Speicherung von Betriebszustandsmatrizen des Hochspannungsmotors und Erwärmungszustandsmatrizen seiner beim Anlauf betroffenen Läuferteile und eine digitale Prozessoreinheit zum Einlesen, Verarbeiten und Ausgeben von digitalen Signalen sowie zum Auswählen der geeigneten Erwärmungs- und Abkühlwerte für die beim Anlauf betroffenen Läuferteile entsprechend des aktuellen Betriebszustandes des Hochspannungsmotors aus den ersten digitalen Speichermitteln sowie ein zweites digitales Speichermittel zur Speicherung des dem Erwärmungszustand der beim Anlauf betroffenen Läuferteilen entsprechenden akkumulierten Gesamtwertes aus Erwärmungs- und Abkühlwerten enthält.

Diese Steuerschaltung ist gemäß der weiteren Erfindung dadurch gekennzeichnet, daß eine Meßeinrichtung zur Bestimmung des Ständerstromes und zur Erzeugung eines diesem proportionalen digitalen Stromsignals sowie ein Zähler mit der Prozessoreinheit verbunden ist, der nach Maßgabe des aus den digitalen Drehzahl- und Stromsignalen gewonnenen aktuellen Betriebszustandsdaten des Hochspannungsmotors gestartet oder angehalten oder zurückgesetzt ist, und daß die Betriebszustandsmatrizen und Erwärmungszustandsmatrizen für die ersten digitalen Speichermittel Wertekombinationen aus Ständerstrom-, Drehzahl und Zählerstand enthalten, und daß die Prozessoreinheit aufgrund der ihr zugeleiteten aktuellen digitalen Ständerstromsignale und digitalen Drehzahlsignale sowie dem ihr zugeführten Zählerstand Wertekombinationen bildet und aus dem mit ihr verbundenen ersten digitalen Speichermittel entsprechende Wertekombinationen der Betriebszustands- bzw. Erwärmungszustandsmatrizen auswählt und daraus diskrete Erwärmungs- oder Abkühlwerte ableitet und in das mit der Prozessoreinheit verbundene, zweite digitale Speichermittel einliest, und daß Mittel zur Anlaufunterbrechung und zur Anlaufverriegelung vorgesehen sind, die mit der Prozessoreinheit und mit einer Schalteinrichtung zur Unterbrechung des Ständerstromkreises des Hochspannungsmotors verbunden sind, wobei die Ausschaltung und Anlaufverriegelung nach Maßgabe des Inhaltes des zweiten digitalen Speichermittels erfolgt und zusätzlich die Schaltstellung der Schalteinrichtung an die Prozessoreinheit durch Meldeeinrichtungen zurückgemeldet ist, und daß erste Anzeigeeinrichtungen vorgesehen sind, die über die Prozessoreinheit mit dem zweiten digitalen Speichermittel verknüpft sind.

Im folgenden ist die Erfindung anhand eines in den Figuren 1 bis 3 der Zeichnung dargestellten, vereinfachten Ausführungsbeispiels für die Anlaufüberwachung für große elektrische Hochspannungsmotoren näher erläutert.
Es zeigen
Figur 1: Ein vereinfachtes Beispiel für eine Betriebszustandsmatrix,
Figur 2: eine graphische Darstellung eines Ablaufbeispiels des Betriebsverfahrens, in Form eines Betriebsablaufdiagrammes,
Figur 3: ein vereinfachtes Blockschaltbild für eine Steuerschaltung zur Durchführung des Betriebsverfahrens.

Elektrische Hochspannungsmotoren werden im allgemeinen asynchron vom Netz aus angefahren. Dazu dient bei schleifringlosen Hochspannungsmotoren entweder eine besondere Anlaufwicklung, wie z. B. eine Käfigwicklung. Es können aber auch bestimmte Teile der vorhandenen Läuferwicklung z. B. der obere Teil der Keilstäbe bei einer Keilstabwicklung oder der Oberstab einer Doppelkäfigwicklung beim asynchronen Anlauf belastet werden. Es ist aber auch möglich, daß nicht geblechte Teile des Läuferkörpers oder der Läuferkörper selbst zur Führung von beim Anlauf auftretenden Strömen im Läufer verwendet werden, in denen die dem Anlaufdrehmoment proportionale Läuferverlustleistung umgesetzt ist.

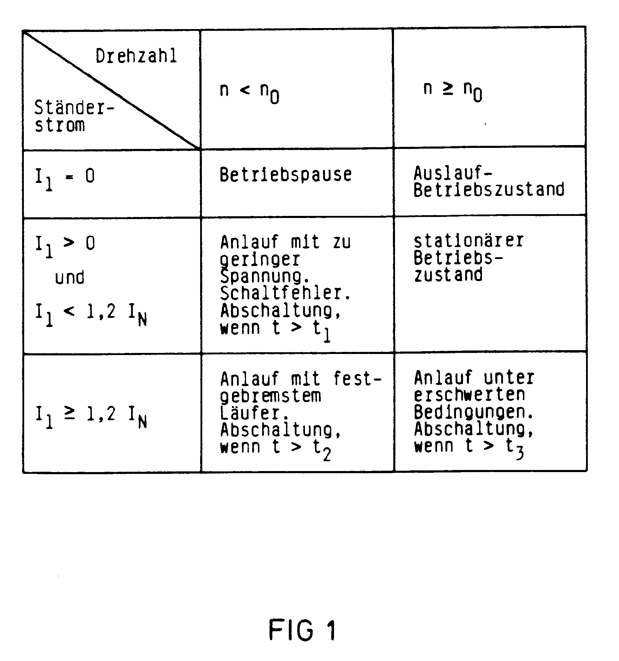

Dieser asynchrone Anlauf führt zu einer sehr starken Erwärmung der beim Anlauf betroffenen Teile des Läufers, die einer direkten Messung nicht zugänglich ist, durch das vorliegende Betriebsverfahren aber berücksichtigt werden kann. Ausgangsbasis des Betriebsverfahren ist die in Figur 1 dargestellte Betriebszustandsmatrix. Sie zeigt Kombinationen der erfaßten Werte Ständerstrom I₁ Läuferdrehzahl n und zeitliche Dauer t der Anlaufvorgänge, stationären Betriebszustände Auslaufvorgänge und Betriebspausen. Ferner sind noch einige Schwellwerte für den Ständerstrom I₁ und die Läuferdrehzahl n definiert, die als zusätzliche Kriterien zur Beurteilung des jeweils vorliegenden Betriebs- bzw. Anlauf-, Auslauf- oder Stillstandszustandes herangezogen werden und die Auswahl eines jeweils zugeordneten Erwärmungswertes, der zur Bildung des akkumulierten Gesamtwertes verwendet wird, erleichtern. Als zusätzliche Werte sind eine Grenzdrehzahl n₀, die etwa 10 % der Nenndrehzahl des Hochspannungsmotors entspricht, und der Nennstrom I_{N} definiert.

Aus der in Figur 1 gezeigten Betriebszustandsmatrix ergeben sich folgende Kombinationen: Ist der Ständerstrom I₁ = 0 und die Drehzahl n kleiner als die Grenzdrehzahl n₀, liegt eine Betriebspause vor. Ist dagegen die Drehzahl n größer oder gleich der Grenzdrehzahl n₀ und der Ständerstrom I₁ = 0, so befindet sich der Hochspannungsmotor im Auslaufzustand. Ist der Ständerstrom I₁ größer als 0 und kleiner als das 1,2fache des Nennstromes I_{N}, liegt bei einer aktuellen Drehzahl n, die kleiner als die Grenzdrehzahl n₀ ist, ein Anlauf mit zu geringer Klemmenspannung am Hochspannungsmotor vor. Da in diesem Fall nur ein Schaltfehler vorliegen kann, ist eine Abschaltung vorgesehen, sobald die Stromflußdauer einen vorbestimmten Wert t₁ überschritten hat. Ist dagegen die Drehzahl n größer oder gleich der Grenzdrehzahl n₀, liegt der normale Betriebszustand vor, so daß keine Unterbrechung des Betriebes wegen einer möglichen Überhitzung der Anlaufwicklung oder -wicklungsteile notwendig ist.

Für den Fall, daß der Ständerstrom I₁ größer oder gleich dem 1,2fachen Nennstrom I_{N} und gleichzeitig die Drehzahl n kleiner als die Grenzdrehzahl n₀ ist, liegt offensichtlich ein Einschalten mit festgebremsten Läufer vor, so daß eine Abschaltung erfolgen muß, wenn die Stromflußdauer einen vorbestimmten zweiten Wert t₂ überschreitet. Sollte dagegen die Drehzahl n größer als die Grenzdrehzahl n₀ sein, liegt bei einem derartig erhöhten Ständerstrom I₁ = 1,2 I_{N}, ein Anlauf unter erschwerten Bedingungen vor, so daß bei weiterem Andauern eines erhöhten Ständerstromes I₁= 1,2 I_{N} nach Überschreiten einer dritten vorbestimmten Zeit t₃ der Anlaufvorgang abgebrochen werden muß.

Bei dem erfindungsgemäßen Betriebsverfahren sind die Zeiten t₁, t₂ und t₃ variable Werte, deren Bestimmung aus der logischen Auswertung des Ständerstromes I nach einer festgelegten Zeit t₀ geschieht. Außerdem sind für jeden Betriebszustand des Hochspannungsmotors aus der Kenntnis des theoretischen Erwärmungsmodells der beim Anlauf betroffenen Läuferteile zeitlich abhängige Erwärmungs- bzw. Abkühl-funktionen festgelegt.

Durch die Kombination der Elemente der in Figur 1 als Beispiel dargestellten Betriebszustandsmatrix mit den berechneten, zeitlich abhängigen Erwärmungs- bzw. Abkühlfunktionen der betroffenen Läuferteile ist eine, hier nicht dargestellte, Erwärmungszustandsmatrix aufgestellt, durch die diskrete und die zeitliche Abhängigkeit des Erwärmungszustandes der beim Anlauf betroffenen Läuferteile berücksichtigende Erwärmungs- bzw. Abkühlwerte definiert sind.

Jedem stationären und vor allem auch jedem transienten Betriebszustand des Hochspannungsmotors ist dadurch eine zeitliche Folge von Erwärmungs- bzw. Abkühlwerten zugeordnet, durch welche das dynamische Temperaturverhalten der beim Anlauf betroffenen Läuferteile erfaßt ist.

Aufgrund der Betriebszustandsmatrix können somit Erwärmungs- bzw. Abkühlwerte aus den Erwärmungszustandsmatrizen herausgesucht und zu einem akkumulierten Gesamtwert addiert und abgespeichert werden. Der jeweils gültige Erwärmungszustand der beim Anlauf betroffenen Läuferteile des Motors ist in Weiterführung des Betriebsverfahrens durch eine Anzeige des akkumulierten Gesamtwertes repräsentiert. Dieser repräsentative Wert ist in Form von natürlichen Zahlen dargestellt und reicht im Erwärmungszustand der beim Anlauf betroffenen Läuferteile auch beim Wechsel von einem in den anderen Betriebszustand ständig dynamisch erfaßt, wodurch auch transiente Übergangszustände und dabei besonders der Anlauf berücksichtigt ist.

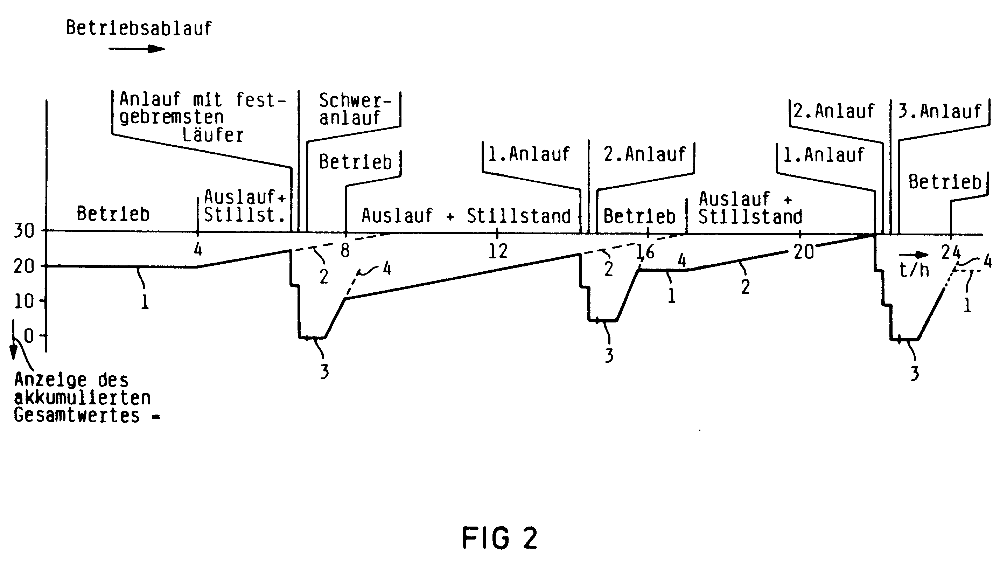

In Figur 2 ist ein Beispiel für den Betriebsablauf eines Hochspannungsmotors dargestellt, bei dem der Schutz seiner beim Anlauf betroffenen Läuferteile nach dem erfindungsgemäßen Betriebsverfahren erfolgt. Auf der Abszisse ist dabei die Zeit t in Stunden dargestellt und auf der Ordinate in negativer Richtung die Anzeige des akkumulierten Gesamtwertes in Zahlen von 30 bis 0. Unter der Annahme eines mehrstündigen Betriebes hat der Läufer des Hochspannungsmotors eine konstante Erwärmung, so daß auch die Anlaufwicklung einen bestimmten Erwärmungswert entsprechend des konstanten Erwärmungszustandes im stationären Betriebszustand 1 aufweist. Dieser Wert liegt bei 20. Zum dargestellten Zeitpunkt vier Stunden wird der Motor ausgeschaltet und läuft bis zum Stillstand in kurzer Zeit aus. Dabei kühlt sich die Anlaufwicklung entsprechend seiner Stillstandsabkühlfunktion 2 ab, wobei nach etwa 2,5 Stunden ein Wert von 25 für den akkumulierten Gesamtwert erreicht ist.

Wird nun nach 6,5 Stunden ein neuer Anlauf ausgelöst, bei dem ein festgebremster Läufer vorliegt, so wird dies durch Analyse des Betriebszustandes, d.h. Vergleich zwischen aktuellen Betriebszustandsdaten und den gespeicherten Betriebszustandsmatrizen, festgestellt und der Anlaufvorgang sofort unterbrochen. Der angezeigte akkumulierte Gesamtwert verringert sich danach um den Wert 10 auf 15. Im Anschluß daran findet ein Schweranlauf statt, nach dessen erfolgreichem Verlauf der angezeigte Wert des akkumulierten Gesamtwertes auf Null abgesunken ist. Da der Motor anschließend in einem normalen, stationären Betriebszustand läuft, wird zunächst eine Ausgleichszeit 3 für die Wärmeverteilung innerhalb des Läufers berücksichtigt und der akkumulierte Gesamtwert konstant gehalten. Nach etwa einer Stunde Betriebszeit werden dem akkumulierten Gesamtwert Abkühlwerte entsprechend der Betriebsabkühlfunktion 4 zugeführt, so daß seine Anzeige relativ schnell wieder ansteigt.

Wird nach insgesamt 8 Stunden eine Ausschaltung des Motors mit Auslauf und nachfolgendem Stillstand vorgenommen, so erfolgt der Anstieg der Anzeige des akkumulierten Gesamtwertes nur noch langsam entsprechend der Stillstandsabkühlfunktion 2.

Hat der akkumulierte Gesamtwert wieder einen ausreichenden Stand erreicht, können erneute Anläufe durchgeführt werden. Dabei werden sowohl die Betriebsabkühlfunktion 4 als auch die Stillstandsabkühlfunktion 2 sowie der konstante Erwärmungszustand im stationären Betriebszustand 1 berücksichtigt. Bei vollständig abgekühltem Motor sind, wie im Betriebsablaufdiagramm in Fig. 2 gezeigt, zum Zeitpunkt 22 Stunden insgesamt drei normale Anläufe hintereinander möglich, ohne daß die beim Anlauf betroffenen Läuferteile überlastet werden oder andererseits die Verfügbarkeit des Hochspannungsmotors ungebührend eingeschränkt wird.

Wie im Betriebsablaufdiagramm der Fig. 2 dargestellt, ist durch die Kombination von Betriebszustandsdaten bestehend aus Ständerstrom I₁, Läuferdrehzahl n sowie der Zeiten t für die unterschiedlichen Anlaufs-, Betriebs- und Stillstandszustände in Kombination mit dem aus dem theoretischen Erwärmungsmodell der Läuferwicklung gewonnenen, jeweils gültigen Erwärmungs- und Abkühlfunktionen 2,4 eine einfache Kontrolle des Erwärmungszustandes der beim Anlauf betroffenen Läuferteile des Hochspannungsmotors geschaffen. Dadurch ist eine sichere aber auch flexible Führung des Betriebes möglich, bei der auch vorausschauend gehandelt werden kann, um eine möglichst hohe Verfügbarkeit des Hochspannungsmotors für die Aufrechterhaltung eines Arbeitsprozesses zu gewinnen, indem, wie z. B. bei 5,5 Stunden, nach einem mißglückten Anlauf durch einen sofort ausgeführten zweiten Anlauf der Hochspannungsmotor schnell in den normalen Betriebszustand mit guter Kühlung überführt werden kann.

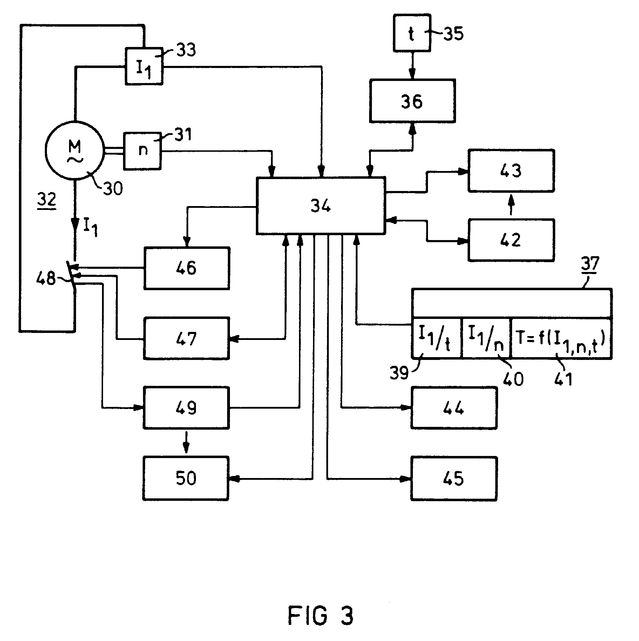

Das zuvor beschriebene Ausführungsbeispiel für das Betriebsverfahren eines großen Hochspannungsmotors läßt sich mit der in Figur 3 stark vereinfacht in Form eines Blockschaltbildes dargestellten Steuerschaltung durchführen.

Dazu ist am Hochspannungsmotor 30 ein Drehzahlsensor 31 sowie im Ständerstromkreis 32 des Hochspannungsmotors 30 eine Ständerstrommeßeinrichtung 33 vorgesehen, die jeweils ihre Daten an eine Prozessoreinheit 34 übertragen. Ferner ist ein Zeitnormal 35 vorgesehen, mit dem ein Zähler 36 normiert ist, der bidirektional mit der Prozessoreinheit 34 verbunden ist und von dieser zurückgesetzt, gestartet, angehalten und abgefragt ist. In einem ersten digitalen Speichermittel 37, das mit der Prozessoreinheit 34 verbunden ist, sind Betriebszustandsmatrizen 39, 40 gespeichert, die aus verschiedenen Einzeldatensammlungen bestehen und eine Ständerstrom/Zeit-Betriebszustandsmatrix 39 und eine Ständerstrom/Drehzahl-Betriebszustandsmatrix 40 enthalten. Außerdem ist in dem ersten digitalen Speichermittel 37 auch eine von den Parametern Ständerstrom I₁ Drehzahl n und Zeit t abhängige Erwärmungszustandsmatrix 41 gespeichert, die aufgrund der vorkommenden Anlauf-, Betriebs-, Auslauf- und Stillstandszustände des Hochspannungsmotors 30 entsprechend den Betriebszustandsmatrizen 39, 40 gebildet ist. Die Erwärmungszustandsmatrix 41 enthält das dynamische, zeitlich abhängige Erwärmungsverhalten der beim Anlauf betroffenen Läuferteile des Hochspannungsmotors 30 in Form der den Elementen der Betriebszustandsmatrizen 39, 40 zugeordneten Erwärmungs- und Abkühlwerte bzw. Erwärmungs- und Abkühlfunktionen 2,4 (siehe Fig. 2).

Die Auswahl der jeweiligen zeitlich abhängigen Erwärmungs- und Abkühlwerte aus der Erwärmungszustandsmatrix 41 erfolgt durch den Vergleich zwischen den aktuellen Betriebszustandsdaten, die über die Drehzahl- 31, Ständerstrom- 33 und Zeiterfassung durch den Zähler 36 gewonnen sind, mit den Daten der Betriebszustandsmatrizen 39, 40 durch die Prozessoreinheit 34.

Mit der Prozessoreinheit 34 ist ein zweites digitales Speichermittel 42 verbunden, in welche die Erwärmungs- und Abkühlwerte von der Prozessoreinheit 34 eingelesen und gespeichert werden, wodurch der akkumulierte Gesamtwert gebildet ist. Da die Erwärmungs- und Abkühlwerte der beim Anlauf betroffenen Läuferteile des Hochspannungsmotors 30 mit jeweils umgekehrtem Vorzeichen in das digitale Speichermittel 42 addiert werden, entspricht dessen Inhalt genau dem aktuellen Erwärmungszustand dieser beim Anlauf betroffenen Läuferteile des Hochspannungsmotors 30. Der Inhalt des digitalen Speichermittels 42 ist von der Prozessoreinheit 34 in Zahlenwerte aus natürlichen Zahlen umgewandelt und mittels einer mit der Prozessoreinheit 34 verbundenen ersten Anzeigeneinrichtung 43 dargestellt. Eine zweite von der Prozessoreinheit 34 gespeiste Anzeigeeinrichtung 44 ist zusätzlich vorgesehen, um durch Anzeige der erfaßten Werte I₁ und n den aktuellen Betriebszustand des Hochspannungsmotors 30 überwachen zu können.

Mit der Prozessoreinheit ist eine dritte Anzeigeeinrichtung 45 verbunden, welche die aufgrund des letzten Auslaufvorganges aus den Betriebszustandsmatrizen 39, 40 und der Erwärmungszustandsmatrix 41 vorbestimmte durch den nächsten Anlauf zu erwartende Veränderung des akkumulierten Gesamtwertes anzeigt. Dadurch kann das Betriebspersonal sehr einfach ablesen, welchen Erwärmungszustand die beim Anlauf betroffenen Teile des Läufers nach dem nächsten Anlauf hätten und können durch entsprechende Maßnahmen, wie z. B. eine Entlastung des Hochspannungsmotors 30, dessen Anlaufbedingungen erleichtern.

Zusätzlich sind in der Steuerschaltung Mittel 46 zur Anlaufunterbrechung und Mittel 47 zur Anlaufverriegelung vorgesehen, die auf eine im Ständerstromkreis 32 des Hochspannungsmotors 30 angeordnete Schalteinrichtung 48 wirken.

Sowohl die Mittel 46 zur Anlaufunterbrechung und die Mittel 47 zur Anlaufverriegelung sind mit der Prozessoreinheit 34 verbunden und von dieser nach Maßgabe des Erwärmungszustandes der beim Anlauf betroffenen Läuferteile des Hochspannungsmotors 30 also nach Maßgabe des Speicherinhaltes des zweiten digitalen Speichermittels 42, angesteuert. Die Schalteinrichtung 48 ist zusätzlich über eine Meldeeinrichtung 49 mit der Prozessoreinheit 34 verbunden, so daß die Schaltstellung der Schalteinrichtung 48 an die Prozessoreinheit 34 zurückgemeldet ist. Eine ebenfalls mit der Prozessoreinheit 34 verbundene vierte Anzeigeeinrichtung 50 dient zur Darstellung der Schaltstellung der Schalteinrichtung 48, wodurch die Überwachung der Betriebszustände des Hochspannungsmotors 30 für das Betriebspersonal zusätzlich erleichtert ist.

Aufgrund des im zweiten digitalen Speichermittel 42 gespeicherten akkumulierten Gesamtwertes, der den Erwärmungszustand der beim Anlauf betroffenen Läuferteile des Hochspannungsmotors 30 repräsentiert, löst die Prozessoreinheit 34 beim Unterschreiten eines vorher festgelegten Schwellenwertes die Mittel 46 zur Anlaufunterbrechung aus, worauf die Schalteinrichtung 48 den Ständerstrom I₁ unterbricht. Da der akkumulierte Gesamtwert und damit der Inhalt des zweiten digitalen Speichermittels 42 und die Betriebszustandsanalyse, d. h. der Vergleich zwischen den aktuellen Betriebszustandsdaten I₁, n und t mit den im ersten digitalen Speichermittel 37 gespeicherten Daten, vor allem auch Anlaufvorgänge berücksichtigt, ist die Unterbrechung des Ständerstromkreises 32 auch bereits vor einem Anlaufvorgang vorgesehen. Dadurch sind die bei asynchronen Anlaufvorgängen am meisten beanspruchte Teile, nämlich die Anlaufwicklung, Anlaufwicklungsteile oder der Läuferkörper bzw. Teile davon, geschützt. Durch die Mittel 47 zur Anlaufverriegelung wird darüberhinaus sichergestellt, daß ein erneuter Anlauf nur dann möglich ist, wenn der Erwärmungszustand der beim Anlauf betroffenen Läuferteile nach Maßgabe des Inhaltes des zweiten digitalen Speichermittels 42 (akkumulierter Gesamtwert) ausreichend ist.

Damit ist der Hochspannungsmotor einerseits automatisch vor Überlastungen während des asynchronen Anlaufs geschützt, obwohl nur der Ständerstrom und die Läuferdrehzahl als motorspezifische Größen gemessen sind. Andererseits ist durch Visualisierung des aktuellen und zu erwartenden Erwärmungszustandes sowie des aktuellen Betriebszustandes für das Betriebspersonal ein Instrument geschaffen, das eine flexible Betriebsführung im Rahmen der zulässigen Erwärmung der beim Anlauf betroffenen Läuferteile erlaubt, so daß die Zahl und Dauer von Betriebsunterbrechungen für den Hochspannungsmotor 30 wesentlich verringert ist, weil die Durchführung von Anläufen des Hochspannungsmotors 30 an den dabei am meisten beanspruchten Läuferteilen, orientiert ist.

## Patentansprüche

1. Betriebsverfahren für elektrische Motoren, bei dem Läuferdrehzahl und zugeführte Leistung erfaßt werden und bei dem Erwärmungswerte, die den relativen Erwärmungszustand des Motors darstellen, wenn dieser bei unterschiedlichen Drehzahlen und Belastungszuständen betrieben wird, gespeichert sind, wobei ein Erwärmungswert jedem bezeichneten Betriebsbereich zugeordnet ist, und bei dem periodisch aufgrund der Läuferdrehzahl und der zugeführten Leistung ermittelt wird, in welchem der bezeichneten Betriebsbereiche der Motor augenblicklich arbeitet, **dadurch gekennzeichnet,** daß zum Schutz von asynchron anlaufenden Hochspannungsmotoren (30) mit einer Umsetzung der Anlaufverluste hauptsächlich innerhalb des Läufers gegen Überlastung während des Anlaufes oder im festgebremsten Zustand zur Bestimmung der im Läufer umgesetzten Leistung lediglich der Ständerwicklungsstrom erfaßt wird, daß die Zahl und die Dauer der Anlaufvorgänge des Hochspannungsmotors (30) überwacht werden und die dynamische Erwärmung und Abkühlung der beim Anlauf betroffenen Läuferteile während der Anlaufvorgänge, der unterschiedlichen Betriebszustände, Auslaufvorgänge und Betriebspausen jeweils durch spezifische, den zeitlichen Verlauf aller dieser transienten und stationären Betriebszustände und Betriebspausen sowie den dabei auftretenden Ständerstrom und die Läuferdrehzahl berücksichtigende, diskrete Wertekombinationen in Form von Erwärmungszustandsmatrizen (41) der betroffenen Läuferteile und Betriebszustandsmatrizen (39, 40) des Hochspannungsmotors (30) repräsentiert sind, aus denen Erwärmungs- und Abkühlwerte der betroffenen Läuferteile abgeleitet sind, die mit entgegengesetztem Vorzeichen zu einem akkumulierten Gesamtwert addiert, gespeichert und angezeigt werden, durch den bestimmt ist, wieviel Anlaufvorgänge noch möglich sind, und daß bei einem bestimmten ersten Wert des akkumulierten Gesamtwertes eine Ausschaltung des Hochspannungsmotors erfolgt, und daß eine Einschaltung durch Verriegelung verhindert ist, solange der akkumulierte Gesamtwert einen bestimmten zweiten Wert nicht erreicht hat.

2. Betriebsverfahren für elektrische Hochspannungsmotoren nach Patentanspruch 1, **dadurch gekennzeichnet,** daß aus dem letzten Auslaufvorgang Elemente der Betriebszustandsmatrizen (39, 40) ausgewählt und daraus Erwärmungswerte für den nächsten Anlauf vorbestimmt werden und zusätzlich angezeigt sind.

3. Betriebsverfahren für elektrische Hochspannungsmotoren nach Patentanspruch 1 oder 2, **dadurch gekennzeichnet,** daß die Anzeige des akkumulierten Gesamtwertes in natürlichen, ganzen Zahlen erfolgt.

4. Betriebsverfahren für elektrische Hochspannungsmotoren nach Patentanspruch 1 oder einem der anderen Ansprüche, **dadurch gekennzeichnet,** daß zusätzliche Schwellenwerte von Ständerstrom und Läuferdrehzahl definiert sind, die als Auslösekriterium für Unterfunktionen dienen und dem akkumulierten Gesamtwert zusätzlich überlagert sind.

5. Steuerschaltung zur Durchführung des Betriebsverfahrens nach Anspruch 1 oder einem der anderen Ansprüche für einen elektrischen Hochspannungsmotor (30) mit einer Umsetzung der Anlaufverluste hauptsächlich innerhalb des Läufers zu dessen Schutz gegen Überlastung während des asynchronen Anlaufes oder im festgebremsten Zustand, die einen Drehzahlsensor (31) zur Feststellung der Drehzahl des Hochspannungsmotors (30) und zur Erzeugung eines drehzahlproportionalen, ersten Eingangssignals sowie erste digitale Speichermittel (37) zur Speicherung von Betriebszustandsmatrizen (39,40) des Hochspannungsmotors und Erwärmungszustandsmatrizen (41) seiner beim asynchronen Anlauf betroffenen Läuferteile und eine digitale Prozessoreinheit (34) zum Einlesen, Verarbeiten und Ausgeben von digitalen Signalen sowie zum Auswählen der geeigneten Erwärmungs- und Abkühlwerte für die betroffenen Läuferteile entsprechend des aktuellen Betriebszustandes des Hochspannungsmotors (30) aus den ersten digitalen Speichermitteln (37) sowie ein zweites digitales Speichermittel (42) zur Speicherung des dem Erwärmungszustand der betroffenen Läuferteile entsprechenden akkumulierten Gesamtwertes aus Erwärmungs- und Abkühlwerten enthält, **dadurch gekennzeichnet,** daß eine Meßeinrichtung (33) zur Bestimmung des Ständerstromes und zur Erzeugung eines diesem proportionalen digitalen Stromsignals sowie ein Zähler (36) mit der Prozessoreinheit (34) verbunden ist, der nach Maßgabe des aus den digitalen Drehzahl- und Stromsignalen gewonnenen aktuellen Betriebszustandsdaten des Hochspannungsmotors (30) gestartet oder angehalten oder zurückgesetzt ist, und daß die Betriebszustandsmatrizen (39, 40) und Erwärmungszustandsmatrizen (41) für die ersten digitalen Speichermittel (37) Wertekombinationen aus Ständerstrom-, Drehzahl und Zählerstand enthalten, und daß die Prozessoreinheit (34) aufgrund der ihr zugeleiteten aktuellen digitalen Ständerstromsignale und digitalen Drehzahlsignale sowie dem ihr zugeführten Zählerstand Wertekombinationen bildet und aus dem mit ihr verbundenen ersten digitalen Speichermittel (37) entsprechende Wertekombinationen der Betriebszustands- (39), (40) bzw. Erwärmungszustandmatrizen (41) auswählt und daraus diskrete Erwärmungs- oder Abkühlwerte ableitet und in das mit der Prozessoreinheit (34) verbundene, zweite digitale Speichermittel (42) einliest, und daß Mittel (46, 47) zur Anlaufunterbrechung und zur Anlaufverriegelung vorgesehen sind, die mit der Prozessoreinheit (34) und mit einer Schalteinrichtung (48) zur Unterbrechung des Ständerstromkreises (32) des Hochspannungsmotors (30) verbunden sind, wobei die Ausschaltung und Anlaufverriegelung nach Maßgabe des Inhaltes des zweiten digitalen Speichermittels (42) erfolgt und zusätzlich die Schaltstellung der Schalteinrichtung (48) an die Prozessoreinheit (34) durch Meldeeinrichtungen (49) zurückgemeldet ist, und daß erste Anzeigeeinrichtungen (43) vorgesehen sind, die über die Prozessoreinheit (34) mit dem zweiten digitalen Speichermittel (42) verknüpft sind.

6. Steuerschaltung nach Patentanspruch 5, **dadurch gekennzeichnet,** daß die aktuellen Strom- und Drehzahlsignale des Hochspannungsmotors (30) über die Prozessoreinheit (34) zweiten Anzeigeeinrichtungen (44) zugeführt sind.

7. Steuerschaltung nach Patentanspruch 5 oder 6, **dadurch gekennzeichnet,** daß die Prozessoreinheit (34) mit dritten Anzeigeeinrichtungen (45) verbunden ist, welche die aufgrund des letzten Auslaufvorganges vorbestimmte, durch den nächsten Anlauf zu erwartende Veränderung des akkumulierten Gesamtwertes anzeigt.

8. Steuerschaltung nach Patentanspruch 5 oder 6 oder 7 **dadurch gekennzeichnet,** daß vierte Anzeigeeinrichtungen (50) vorhanden sind, die über die Prozessoreinheit (34) mit der Schalteinrichtung (48) verbunden sind.

## Claims

1. Operating method for electric motors, in which rotor speed and supplied power are measured and in which heating values, which represent the relative heating state of the motor, if the latter is operated at different speeds and load states, are stored, whereby a heating value is associated with each operating region shown, and in which it is periodically determined, due to the rotor speed and the supplied power, in which of the operating regions shown the motor is momentarily working, characterized in that for the protection of asynchronously starting high-voltage motors (30) against overloading during the starting or in the locked state with a change of the starting losses mainly within the rotor only the stator-winding current is measured for the determination of the power converted in the rotor, in that the number and the duration of the starting processes of the high-voltage motor (30) are monitored, and the dynamic heating and cooling of the rotor parts affected upon starting during the starting processes, the different operating states, running-down processes and operating intervals are in each case represented by specific discrete value combinations which take into consideration the temporal course of all of these transient and stationary operating states and operating intervals as well as the stator current arising thereby and the rotor speed, and which are in the form of heating-state matrices (41) of the affected rotor parts and operating-state matrices (39, 40) of the high-voltage motor (30), from which heating values and cooling values of the affected rotor parts are derived, which are added with opposite sign to an accumulated total value, are stored and displayed, by means of which total value it is determined how many starting processes are still possible, and in that with a certain first value of the accumulated total value a disconnection of the high-voltage motor takes place, and in that a connection by means of interlocking is prevented, as long as the accumulated total value has not reached a certain second value.

2. Operating method for electric high-voltage motors according to claim 1, characterized in that from the last running-down process, elements of the operating-state matrices (39, 40) are selected and heating values for the next start are predetermined therefrom and are additionally displayed.

3. Operating method for electric high-voltage motors according to claim 1 or 2, characterized in that the display of the accumulated total value takes place in natural, whole numbers.

4. Operating method for electric high-voltage motors according to claim 1 or one of the other claims, characterized in that additional threshold values of stator current and rotor speed are defined, which serve as initiating criterion for subfunctions and are additionally superimposed on the accumulated total value.

5. Control circuit for carrying out the operating method according to claim 1 or one of the other claims for an electric high-voltage motor (30) with a change of the starting losses mainly within the rotor, for its protection against overloading during asynchronous starting or in the locked state, which contains a speed sensor (31) to establish the speed of the high-voltage motor (30) and to generate a speed-proportional first input signal as well as first digital storage means (37) for storing operating-state matrices (39, 40) of the high-voltage motor and heating-state matrices (41) of its rotor parts affected upon the asynchronous starting and a digital processor unit (24) for reading in, processing and displaying digital signals as well as for selecting the suitable heating values and cooling values for the affected rotor parts corresponding to the actual operating state of the high-voltage motor (30) from the first digital storage means (37) as well as a second digital storage means (42) for storing the accumulated total value of heating values and cooling values corresponding to the heating state of the affected rotor parts, characterized in that a measuring device (33) for determining the stator current and for generating a digital current signal proportional thereto as well as a counter (36) is connected to the processor unit (34), which, in accordance with the actual operating-state data of the high-voltage motor (30), obtained from the digital speed signals and current signals, is started or stopped or reset, and in that the operating-state matrices (39, 40) and heating-state matrices (41) for the first digital storage means (37) contain value combinations from stator current status, speed and count status, and in that the processor unit (34), due to the actual digital stator-current signals and digital speed signals conducted to it as well as the count status supplied to it, forms value combinations and from the first digital storage means (37) connected therewith selects corresponding value combinations of the operating-state matrices (39), (40) or heating-state matrices (41) and derives therefrom discrete heating values or cooling values and reads them into the second digital storage means (42) connected to the processor unit (34), and in that means (46, 47) for interrupting the start and for interlocking the start are provided, which are connected to the processor unit (34) and to a switching device (48) for the interruption of the stator-current circuit (32) of the high-voltage motor (30), whereby the disconnection and start interlocking take place in accordance with the content of the second digital storage means (42) and in addition the switching position of the switching device (48) is signalled back to the processor unit (34) by means of signalling devices (49), and in that first display devices (43) are provided, which are linked by way of the processor unit (34) to the second digital storage means (42).

6. Control circuit according to claim 5, characterized in that the actual current signals and speed signals of the high-voltage motor (30) are supplied by way of the processor unit (34) to second display devices (44).

7. Control circuit according to claim 5 or 6, characterized in that the processor unit (34) is connected to third display devices (45), which display the change of the accumulated total value which is predetermined due to the last running-down process and is to be expected by means of the next start.

8. Control circuit according to claim 5 or 6 or 7, characterized in that fourth display devices (50) are present, which are connected by way of the processor unit (34) to the switching device (48).

## Revendications

1. Procédé pour faire fonctionner les moteurs électriques, selon lequel la vitesse de rotation du rotor et la puissance envoyée sont détectées et des valeurs d'échauffement, qui représentent l'échauffement relatif du moteur lorsque ce dernier fonctionne à des vitesses de rotation différentes et avec des états de charge différents, sont mémorisés, une valeur d'échauffement étant associée à chaque gamme de fonctionnement désignée, et selon lequel celle des gammes de fonctionnement désignées, dans laquelle le moteur travaille à cet instant, est déterminée périodiquement sur la base de la vitesse de rotation du rotor et de la puissance envoyée, caractérisé par le fait que pour la protection de moteurs à haute tension à démarrage asynchrone avec une conversion des pertes au démarrage principalement à l'intérieur du rotor, vis-à-vis d'une surcharge au démarrage ou bien dans un état de freinage intense pour déterminer la puissance convertie dans le rotor, seul le courant de l'enroulement statorique est détecté, que le nombre et la durée des opérations de démarrage du moteur à haute tension (30) sont contrôlés et que l'échauffement et le refroidissement dynamique des parties du rotor, qui sont concernées lors du démarrage, pendant les démarrages, les différents états de fonctionnement, les processus d'arrêt par inertie et les pauses de fonctionnement sont représentés respectivement par des combinaisons discrètes spécifiques de valeurs, qui tiennent compte de l'allure dans le temps de tous ces états de fonctionnement transitoires et stationnaires et de toutes ces pauses de fonctionnement ainsi que du courant statorique, qui apparaît, et de la vitesse de rotation du rotor, sous la forme de matrices d'états d'échauffement (41) des parties concernées du rotor et de matrices d'états de fonctionnement (39,40) du moteur à haute tension (30), à partir desquelles sont obtenues des valeurs d'échauffement et de refroidissement des parties concernées du rotor, qui sont additionnées, avec un signe opposé, pour former une valeur cumulée globale, sont mémorisées et affichées, cette valeur globale permettant de déterminer combien de démarrages sont encore possibles et que pour une première valeur déterminée de la valeur cumulée globale, il se produit un débranchement du moteur à haute tension, et qu'un branchement est empêché par un système de verrouillage tant que la valeur cumulée globale n'a pas atteint une seconde valeur déterminée.

2. Procédé pour faire fonctionner des moteurs électriques à haute tension suivant la revendication 1, caractérisé par le fait que les éléments des matrices d'états de fonctionnement (39,40) sont sélectionnés à partir du dernier démarrage et qu'à partir de là des valeurs d'échauffement sont prédéterminées pour le démarrage immédiatement suivant et sont affichées en supplément.

3. Procédé pour faire fonctionner des moteurs électriques à haute tension suivant la revendication 1 ou 2, caractérisé par le fait que l'affichage de la valeur cumulée globale s'effectue sous la forme de nombres entiers naturels.

4. Procédé pour faire fonctionner des moteurs électriques à haute tension suivant la revendication 1 ou l'une des autres revendications, caractérisé par le fait que des valeurs de seuil supplémentaires du courant statorique et de la vitesse de rotation du rotor, qui servent de critère de déclenchement pour des fonctions secondaires et sont en outre superposées à la valeur cumulée globale, sont définies.

5. Circuit de commande pour la mise en oeuvre du procédé de fonctionnement suivant la revendication 1 ou l'une des autres revendications pour un moteur électrique à haute tension (30) avec une conversion des pertes au démarrage principalement à l'intérieur du rotor en vue de sa protection contre une surcharge pendant le démarrage asynchrone ou à l'état de freinage intense, et qui comporte un capteur (31) de la vitesse de rotation servant à déterminer la vitesse de rotation du moteur à haute tension (30) et à produire un premier signal d'entrée proportionnel à la vitesse de rotation, ainsi que des premiers moyens de mémoire numériques (37) servant à mémoriser des matrices d'états de fonctionnement (39,40) du moteur à haute tension et des matrices d'états d'échauffement (41) des parties de son rotor, qui sont concernées lors du démarrage asynchrone, et l'unité formant processeur numérique (34) pour mémoriser, traiter et délivrer des signaux numériques ainsi que pour sélectionner les valeurs appropriées d'échauffement et de refroidissement pour les parties concernés du rotor en fonction de l'état actuel de fonctionnement du moteur à haute tension (30) à partir des premiers moyens de mémoire numérique (37), ainsi que de seconds moyens de mémoire numériques (42) pour mémoriser la valeur cumulée globale, qui correspond à l'état d'échauffement des parties concernées du rotor, à partir de valeurs d'échauffement et de refroidissement, caractérisé par le fait que le dispositif de mesure (33) servant à déterminer le courant statorique et à produire un signal de courant numérique proportionnel à ce courant, ainsi qu'un compteur (36) sont raccordés à l'unité formant processeur (34), qui démarre ou est arrêtée ou est ramenée à zéro, et que les matrices d'états de fonctionnement (39,40) et les matrices d'états d'échauffement (41) contiennent, pour les premiers moyens de mémoire numérique (37), la combinaison de valeurs obtenue à partir du courant statorique, de la vitesse de rotation et de l'état du compteur, et que l'unité formant processeur (34) forme des combinaisons de valeurs sur la base des signaux numériques réels du courant statorique, qui lui sont envoyés, et des signaux numériques de la vitesse de rotation ainsi que de l'état du compteur, qui lui est envoyé, et sélectionne, à partir des premiers moyens de mémoire numérique (37), qui lui sont raccordés, des combinaisons correspondantes de valeurs des matrices d'états de fonctionnement (39), (40) ou des matrices d'états d'échauffement (41), et obtient, à partir de là, des valeurs discrètes d'échauffement ou de refroidissement et les introduit dans les seconds moyens de mémoire numériques (42), raccordés à l'unité formant processeur (34), et qu'il est prévu des moyens (46,47) pour interrompre le démarrage et pour bloquer le démarrage, qui sont raccordés à l'unité formant processeur (34) et à un dispositif de coupure (48) servant à interrompre le circuit statorique (32) du moteur à haute tension (30), la coupure et le blocage au démarrage s'effectuant en fonction du contenu des seconds moyens de mémoire numérique (42) et en outre, la position de coupure du dispositif de coupure (48) étant signalée en retour à l'unité formant processeur (34) par des dispositifs de signalisation (49), et qu'il est prévu des premiers dispositifs d'affichage (43) qui sont combinés, par l'intermédiaire de l'unité formant processeur (34), aux seconds moyens de mémoire numériques (42).

6. Circuit de commande suivant la revendication 5, caractérisé par le fait que les signaux réels du courant et de la vitesse de rotation du moteur à haute tension (30) sont envoyés, par l'intermédiaire d'une unité formant processeur (34), à des seconds dispositifs d'affichage (44).

7. Circuit de commande suivant la revendication 5 ou 6, caractérisé par le fait que l'unité formant processeur (34) est raccordée à des troisièmes dispositifs d'affichage (45), qui, sur la base du dernier démarrage, affichent la modification de la valeur cumulée globale, qui est prédéterminée sur la base du dernier démarrage et à laquelle il faut s'attendre lors du démarrage immédiatement suivant.

8. Circuit de commande suivant la revendication 5 ou 6 ou 7, caractérisé par le fait qu'il est prévu des quatrièmes dispositifs d'affichage (50), qui sont raccordés par l'intermédiaire de l'unité formant processeur (34) au dispositif de coupure (48).
